# EUROPÄISCHE PATENTSCHRIFT

(11) **EP 0 871 894 B1**
(45) Veröffentlichungstag und Bekanntmachung des Hinweises auf die Patenterteilung: **18.09.2002**
(21) Anmeldenummer: 96937288.7
(22) Anmeldetag: 30.10.1996
(51) Int. Cl.: G01N 35/10, B01L 9/00, B65D 21/02

(54) **MODULARE REAGENZIENKARTUSCHE**
MODULAR REAGENT CARTRIDGE
CARTOUCHE MODULAIRE DE REACTIFS

(30) Priorität: 02.11.1995 DE 19540877
(43) Veröffentlichungstag der Anmeldung: 21.10.1998
(73) Patentinhaber: Byk-Sangtec Diagnostica GmbH & Co. KG, 63128 Dietzenbach (DE)
(72) Erfinder: MACK, Michael, D-63452 Hanau (DE); NEBEL, Peter, D-63906 Erlenbach (DE); STOERK, Peter, D-63500 Seligenstadt (DE)
(74) Vertreter: Rupp, Herbert, Dr.
(86) Internationale Anmeldenummer: EP9604705
(87) Internationale Veröffentlichungsnummer: WO97016734

(56) Entgegenhaltungen:
- EP-A- 0 125 996
- EP-A- 0 231 141
- EP-A- 0 313 977
- EP-A- 0 435 481
- DE-A- 3 903 645
- FR-A- 2 110 030
- FR-A- 2 537 096
- US-A- 5 320 809
- US-A- 5 322 668

## Beschreibung

Die vorliegende Erfindung betrifft eine Reagenzienkartusche zur Bevorratung von gebrauchsfertigen, biochemischen Reagenzien in flüssiger Form, die eine einfache Beladung und Verwendung in einem vollautomatischen Analysengerät ermöglichen soll.

Reagenzienbehälter sind aus dem Stand der Technik grundsätzlich bekannt. So beschreibt beispielsweise die EP 0 564 970 A3 ein sogenanntes Reagenzien-Kit, bei dem drei Reagenzienbehälter in einem quaderförmigen Rahmen gehalten sind. Hierbei besitzt das Gehäuse im Boden und im Deckel Öffnungen, die eine Luftzirkulation durch den Innenraum des Gehäuses ermöglichen, um eine gleichmäßige Kühlung der Reagenzbehälter zu gewährleisten.

Die EP 0 435 481 A2 beschreibt eine Analysenvorrichtung mit einer Drehscheibe, auf der Reagenzienbehälter angeordnet sind. Hierbei sind jeweils zwei der kuchenstückförmigen Behälter über einen aufschnappbaren Deckel zu einer Doppelpackung miteinander verbunden. Zur erleichterten Herstellung kann die Doppelpackung auch einstückig ausgebildet sein.

Die EP 0313 977 A2 beschreibt eine Stelleinheit für Reagenz-, Probenröhrchen oder dergleichen, die durch einen Block oder Zylinder mit einer nach oben offenen Ausnehmung gebildet wird. Die Seitenflächen des Blocks oder Zylinders sind mit sich senkrecht zu dieser Fläche erstreckenden Klemmöffnungen und sich ebenfalls senkrecht zu dieser Seitenfläche erstreckenden Klemmvorsprüngen versehen. Die Ausbildung von Klemmöffnung und Klemmvorsprüngen mit senkrecht zu den Seitenflächen des Blocks oder Zylinders sich erstreckenden Flächen soll gewährleisten, daß mehrere Stelleinheiten in beliebiger Zahl und in allen Richtungen der waagrechten Ebene zu einem Verbund zusammengefügt werden können.

Die US 5,322,668 beschreibt eine kuchenstückförmige Halterung für Reagenzbehälter, bei der die Reagenzbehälter in vorgeschriebenen Positionen gehalten werden, zur Verwendung in einem Analysengerät. Die Halterung für die Reagenzbehälter weist weiterhin eine Vielzahl von Reaktionsküvetten auf, die mit Antikörper-Reagenzien bestückt sein können.

Aus der FR 2110030 A ist eine Vorrichtung bekannt, bei der eine Vielzahl von Behältern, wie Becher oder Hohlräume als integrale Bestandteile durch eine horizontales Trägerteil und vertikale Trägerteile miteinander verbunden sind. Über schwalbenschwanzförmige Kopplungseinrichtungen kann eine Reihe solcher Vorrichtungen miteinander verbunden werden.

In der FR 2537096 A1 wird ein Tablettenröhrchen beschreiben, das einen zylindrischen Körper aufweist, der an einem Ende einen dünnen, mehreckigen über den zylindrischen Körper hervorstehenden Verschluss aufweist. Dieser Verschluss kann Kopplungseinrichtungen aufweisen, durch die mehrere dieser Tablettenröhrchen miteinander verbunden werden können.

Aus der DE 3903 645 A1 ist eine Vorrichtung für die Aufbewahrung von Reagenzien, die Durchführung von Tests und die Aufbewahrung von Testergebnissen, bestehend aus einem Gefäß mit einer Öffnung in der Oberseite und einem aufsteckbarenVerschluß, bekannt. Die Seitenwände des Gefäßes weisen im oberen Bereich einen Versprung nach innen auf. Dadurch können mehrere Gefäße übereinander gesteckt werden.

Die EP 0125996 A1 betrifft einen modularen Träger in Form eines quaderförmigen Korbes zur Aufnahme von Behältern variabler Größe zur Verwendung in Analysengeräten. Über seitliche Kopplungseinrichtungen kann eine Reihe solcher Träger miteinander verbunden werden.

Schließlich beschreibt die EP 0 502 638 A2 eine automatische Analysenvorrichtung mit einer Vielzahl von länglichen Reagenzienbehältern, die von einem automatischen Handhabungssystem transportiert werden. Um einen Transport dieser Reagenzienbehälter zu ermöglichen, sind diese mit seitlichen Flanschen sowie Vorsprüngen versehen.

Es ist das der Erfindung zugrundeliegende Problem (Aufgabe), ein Mittel zur Handhabung von Reagenzien zu schaffen, das eine flexible Handhabung auch bei unterschiedlichsten Reagenzienchargen ermöglicht.

Die Lösung dieser Aufgabe erfolgt durch die Merkmale des Anspruchs 1. Erfindungsgemäß ist eine modulare Reagenzienkartusche vorgesehen, die dadurch gebildet ist, daß mehrere Reagenzienbehälter mittels einstückig angeformter Kopplungseinrichtungen unmittelbar miteinander verbunden sind.

Die Erfindung schafft erstmals ein modulares System aus Reagenzienbehältern, wobei die einzelnen Behälter durch die einstückig angeformten Kopplungseinrichtungen zu einer Reagenzienkartusche verbunden werden können. Eine derartige Kartusche kann dann mit nur einem Handgriff in ein Analysengerät eingesetzt werden. Durch den modularen Aufbau der Reagenzienkartusche können ferner die Reagenzienbehälter während des Abfüllprozesses einzeln bearbeitet werden und nach erfolgter Produktion werden diese Reagenzienbehälter in einem einzigen Konfektionierungsschritt zu einer Reagenzienkartusche montiert. Hierbei sind keine weiteren Kopplungselemente oder dergleichen erforderlich. Vielmehr werden die einzelnen Reagenzienbehälter unmittelbar ohne Zwischenschaltung von zusätzlichen Verbindungselementen miteinander verbunden. Hierdurch ist die freie Kombinierbarkeit unterschiedlichster Reagenzienchargen immer gewährleistet. Somit ergeben sich durch die erfindungsgemäße Reagenzienkartusche noch nicht dagewesene Handhabungsvorteile, die insbesondere im Zuge des Produktionsprozesses auch Zeit einsparen, da das Befüllen der Reagenzienbehälter im noch nicht montierten Zustand erfolgen kann und nach Konfektionierung der Kartusche diese als eine Einheit zu handhaben ist. Gleichzeitig lassen sich eventuell schadhaft gewordene Behälter ohne weiteres durch neue Behälter ersetzen, ohne daß die gesamte Kartusche ausgewechselt werden müßte. Darüber hinaus ist es möglich, Reagenzienbehälter mit unterschiedlichen Größen bzw. Volumina miteinander zu einer Kartusche zu kombinieren, wobei die Kombination beliebig vorgenommen werden kann. Dies bedeutet gleichzeitig, daß nicht eine große Anzahl unterschiedlicher Reagenzienkartuschen bereitgestellt werden muß. Vielmehr kann jede Kartusche mit der gewünschten Behälterkombination individuell zusammengestellt werden.

Vorteilhafte Ausführungsformen der Erfindung sind durch die Unteransprüche gekennzeichnet.

Nach einer ersten vorteilhaften Ausführungsform kann zumindest ein Reagenzienbehälter eine vorzugsweise einrastende Verbindungseinrichtung aufweisen, um eine kraftschlüssige Verbindung zwischen der Reagenzienkartusche und einem Analysengerät herzustellen. Ein derartiger Reagenzienbehälter, der gewissermaßen ein Grundelement des modularen Systems darstellen kann, ermöglicht eine kraftschlüssige Verbindung zwischen der Reagenzienkartusche und dem Analysengerät, die aufgrund des speziellen Rastmechanismus beliebig oft hergestellt und leicht wieder gelöst werden kann. Vorteilhafterweise ist die Rastverbindung ebenfalls einstückig an den Reagenzienbehälter angeformt.

Nach einer weiteren Ausbildung der Erfindung besteht ein Reagenzienbehälter aus einem Halterahmen und mindestens einem Behältnis, das ein geringeres Volumen als ein Reagenzienbehälter besitzt. Diese Ausführungsform ermöglicht auch die Verwendung von kleinvolumigen Reagenzienbehältnissen, wobei diese in dem Halterahmen aufgenommen sind, der wiederum ein Modul des Systems bildet. Hierdurch ergibt sich gleichzeitig der Vorteil, daß auch mehrere der Behältnisse mit geringerem Volumen in einem einzigen Halterahmen aufgenommen werden können, wobei sich ein und derselbe Halterahmen auch für mehrere Behältnisse mit unterschiedlichen Volumina eignet.

Besonders vorteilhaft ist es, wenn zumindest ein Behältnis drehbar in dem Halterahmen aufgenommen ist und dabei vorzugsweise einen angeformten Zahnkranz aufweist. Durch die drehbare Aufnahme kann das Behältnis, vorzugsweise mittels des angeformten Zahnkranzes, eine Rotationsbewegung um seine vertikale Achse durchführen, um eine in dem Behältnis enthaltene Suspension zu durchmischen. Besonders vorteilhaft ist es hierbei, wenn der Halterahmen teilweise offen ausgebildet ist, derart, daß ein Zugang zu einer Seite oder Unterseite des Behältnisses ermöglicht ist. Hierdurch läßt sich ein Antrieb an das Behältnis ankoppeln, damit dieses in eine Drehung versetzt wird. Ein solcher Antrieb kann beispielsweise durch ein Zahnrad oder eine Zahnstange erfolgen. Es können auch mehrere der Behältnisse mit Zahnkränzen oder dergleichen versehen sein, so daß der Antrieb lediglich an einem der Behältnisse angreifen muß. Durch Übertragung der Drehbewegung können dann mehrere der in dem Halterahmen aufgenommenen Behältnisse in Drehung versetzt werden.

Nach einer weiteren Ausbildung der Erfindung ist das in dem Halterahmen aufgenommene Behältnis fixiert. Hierdurch wird sichergestellt, daß das Behältnis nicht versehentlich aus dem Halterahmen herausfällt und daß bei Auferlegung einer Drehbewegung das Behältnis stets an der gleichen Stelle im Rahmen verbleibt. Die Fixierung kann dabei vorteilhafterweise durch elastisch wegfedernde Rastnasen erfolgen, was eine sehr schnelle und einfache Handhabung gewährleistet.

Weiter ist es vorteilhaft, wenn die erfindungsgemäße Reagenzienkartusche einen Griff mit einer einstückig angeformten Kopplungseinrichtung aufweist. Ein derartiger Griff läßt sich in gleicher Weise wie die Reagenzienbehälter an der Reagenzienkartusche ankoppeln, so daß eine gute Handhabung der Reagenzienkartusche sichergestellt ist, insbesondere wenn eine Vielzahl von Reagenzienkartuschen nebeneinander angeordnet wird. In diesem Fall ist es besonders vorteilhaft, wenn der Griff eine Fingeröffnung aufweist, da dann ein Herausziehen der Kartusche aus dem Analysengerät mit nur einem Finger möglich ist. Um die Flexibilität der modularen Reagenzienkartusche zu erhöhen, kann der Griff auch ein vorzugsweise einstückig eingeformtes Verlängerungsteil aufweisen, das der Länge zumindest eines Reagenzienbehälters entspricht. Hierdurch wird eine jeweils konstante Länge der Reagenzienkartusche gewährleistet, auch wenn ein Behälter weniger angekoppelt wird, da der Griff die Länge des fehlenden Behälters kompensiert.

Die erfindungsgemäß vorgesehene Kopplungseinrichtung kann in vorteilhafter Weise durch formschlüssige Schienenführungen gebildet sein, die im gekoppelten Zustand selbsttätig verklemmen. Hierdurch müssen die einzelnen Reagenzienbehälter lediglich an den Schienenführungen "ineinander geschoben" werden, was eine sehr schnelle Handhabung ermöglicht. Der Querschnitt der Schienenführungen kann jede geeignete Form aufweisen, beispielsweise rechteckig oder schwalbenschwanzförmig sein. Besonders vorteilhaft ist es jedoch, wenn die Schienenführung einen Anschlag aufweist. Hierdurch muß bei Konfektionierung der Reagenzienkartusche nicht darauf geachtet werden, daß sämtliche Reagenzienbehälter an der Oberseite bündig abschließen, da dies durch den vorgesehenen Anschlag sichergestellt wird.

Nach einer weiteren vorteilhaften Ausbildung der Erfindung weisen die Reagenzienbehälter die gleiche Länge und/oder Breite auf, d.h. die Behälterabmessungen in einer Dimension sind gleich groß. Hierdurch ergibt sich eine Kartusche mit einheitlicher Formgebung, d.h. mit konstanter Breite.

Zum Schutz der Behälter kann die Reagenzienkartusche einen aufsetzbaren Deckel aufweisen, der auf die Oberseite der Kartusche aufgestülpt wird.

Schließlich ist es besonders vorteilhaft, wenn die Reagenzienkartusche zumindest teilweise an ihrer Außenseite eine weitgehend ebene, zusammenhängende Fläche bildet, die sich über die Reagenzienbehälter erstreckt. Hierdurch kann ein Etikett, das alle relevanten, testspezifischen Daten in codierter Form enthält, glatt auf die Außenseite der Reagenzienkartusche aufgebracht werden, obwohl diese aus mehreren Reagenzienbehältern zusammengesetzt ist.

Nachfolgend wird eine vorteilhafte Ausführungsform der Erfindung rein beispielhaft unter Bezugnahme auf die beigefügten Zeichnungen beschrieben. Es zeigen:
- Fig. 1: eine Seitenansicht einer modularen Reagenzienkartusche;
- Fig. 2: einen Querschnitt durch die Reagenzienkartusche von Fig. 1;
- Fig. 3: eine Draufsicht auf die Reagenzienkartusche von Fig. 1; und
- Fig. 4: einen Querschnitt entlang der Linie IV-IV in Fig. 3.

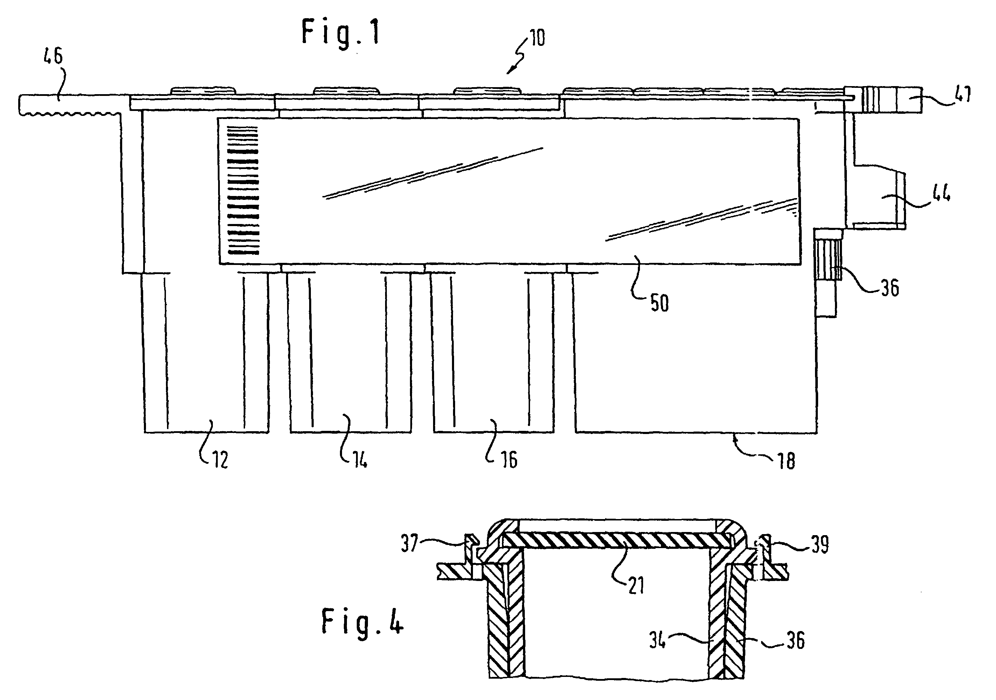

Die in Fig. 1 dargestellte modulare Reagenzienkartusche 10 ist dadurch gebildet, daß mehrere Reagenzienbehälter 12, 14, 16 und 18 mittels einstückig angeformter Kopplungseinrichtungen unmittelbar miteinander verbunden sind. Hierbei sind die Reagenzienbehälter 12, 14 und 16 gleich ausgebildet und bestehen aus einem im wesentlichen quaderförmigen Behälter, der mit einer Gummironde 21 aus Silikon verschlossen ist, die geschlitzt ist und eine Befüllung der Reagenzienbehälter in einem speziellen Herstellungsschritt und eine automatische Entnahme von Aliquots in Reagenzienpositionen im Analysengerät ermöglicht. Die Art und Form des Schlitzes, der in Kreuz-, Stern- oder Geradenform ausgebildet sein kann, ist vorzugsweise so gestaltet, daß sich dieser nach Ausfahren des Abfülldorns einer Abfüllmaschine oder Pipettiernadel des Analysengerätes wieder dicht verschließt.

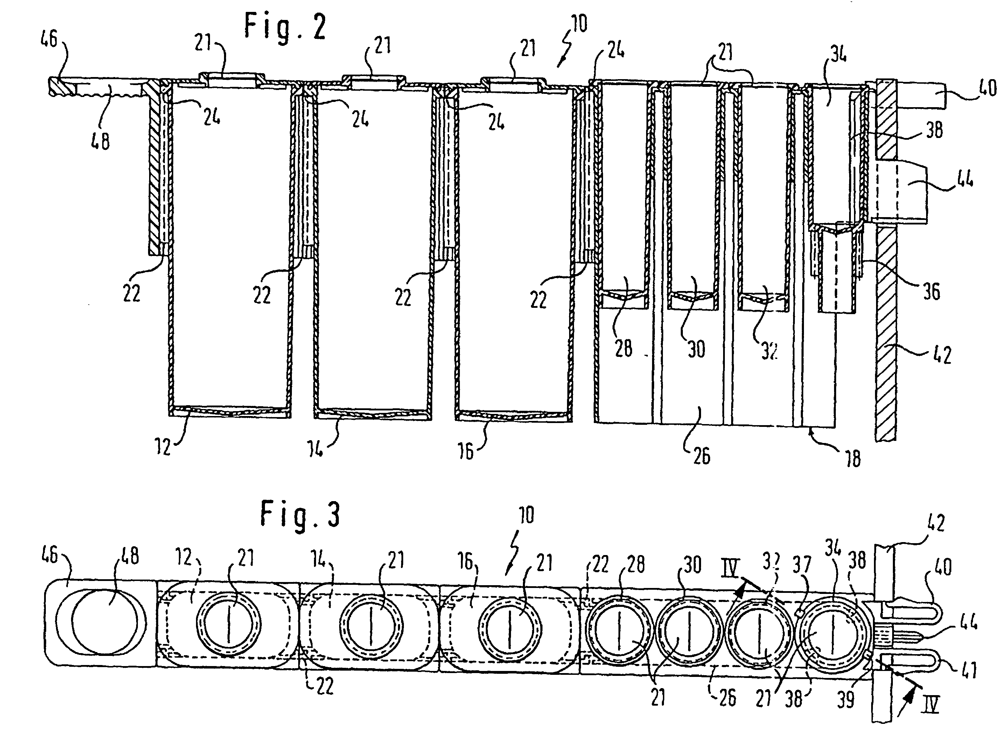

Wie Fig. 2 zeigt, besteht die einstückig an die Reagenzienbehälter angeformte Kopplungseinrichtung aus formschlüssigen Schienenführungen 22 mit rechteckigem Querschnitt, die ineinander geschoben werden, wobei die einzelnen Reagenzienbehälter die dargestellte Reagenzienkartusche bilden. Am oberen Ende der Schienenführung 22 ist der obere Rand der Reagenzienbehälter 12 bis 18 in dem Bereich der Schienenführungen 22 hineingeführt, so daß sich ein Anschlag 24 bildet, der ein fluchtendes Ineinandersetzen der Reagenzienbehälter sicherstellt. Die Schienenführungen 22 sind derart ausgebildet, daß an jeweils einer Seite eines Reagenzienbehälters ein im Querschnitt gesehen U-förmiges Schienenpaar angeordnet ist, wobei die Öffnungen des "U" aufeinanderzu weisen. Durch diese parallel beabstandeten Schienen wird gewissermaßen ein rechteckiger Querschnitt gebildet, in den die Schienen des zu koppelnden Reagenzienbehälters eingeführt werden können. Diese Schienen befinden sich auf der jeweils anderen Seite eines Reagenzienbehälters und sind im Querschnitt L-förmig ausgebildet, wobei beim Aneinanderkoppeln zweier Behälter ein Schenkel des "L" jeweils einer der im Querschnitt U-förmigen Schienen gleitet. Um ein selbsttätiges Verklemmen der Reagenzienbehälter bei Erreichen des Anschlags 24 zu erzielen, ist ein Schenkel der im Querschnitt U-förmigen Schienen leicht keilförmig ausgebildet, so daß sich beim Einschieben des zu koppelnden Reagenzienbehälters eine leichte Klemmwirkung ergibt, die bei Erreichen des Anschlags 24 maximal ist. Schließlich weisen die im Querschnitt L-förmigen Schienen an ihren Enden jeweils eine Verlängerung auf, die mit Einlaufschrägen versehen ist, um das "Einfädeln" zu erleichtern.

Der in den Figuren dargestellte Reagenzienbehälter 18 ist aus einem Halterahmen 26 gebildet, der insgesamt vier Behältnisse 28, 30, 32 und 34 aufnimmt, die ein geringeres Volumen als die Reagenzienbehälter 12, 14 und 16 besitzen. Die Behältnisse 28 bis 34 besitzen eine im wesentlichen zylindrische Form und sind an der Oberseite ebenfalls mit einer geschützten Gummironde 21 verschlossen. Hierbei sind die Behältnisse 28 bis 34 in entsprechende Kammern in dem Halterahmen 26 eingesetzt.

Sämtliche Behältnisse 28 bis 34 sind in dem Halterahmen 26 drehbar aufgenommen, wobei das Behältnis 34 an seiner Unterseite einen angeformten Zahnkranz 36 aufweist. Der Halterahmen 26 ist dabei in seinem hinteren Bereich, d.h. im Bereich des Zahnkranzes 36 offen ausgebildet, so daß von der in den Fig. 1 bis 3 rechten Seite aus ein Zugang zu dem Zahnkranz 36 ermöglicht ist. Hierdurch kann zur Durchmischung einer in dem Behältnis 34 enthaltenen Suspension ein Antrieb über eine Zahnstange oder ein Zahnrad erfolgen. Durch diesen Antrieb wird das Behältnis 34 in eine Drehung um seine Längsachse um jeweils 180° versetzt. Um dabei Suspensionen als homogene Suspension zu erhalten, sind an der Innenwandung des Behältnisses 34 sich in Längsrichtung erstreckende Innenrippen 38 (vgl. Fig. 3) angeformt, die achsparallel ausgerichtet sind. Hierdurch wird das Mischgut während der Drehbewegung um die vertikale Achse aus einer mantelnahen Ringzone des Behältnisses unter Wirbelbildung in Richtung der achszentralen Entnahmezone verdrängt.

Wie Fig. 4 zeigt, ist das Behältnis 34 in dem Halterahmen 36 durch zwei Rastnasen 37, 39 fixiert, die über einen Rand des Behältnisses greifen. Aufgrund der flexiblen Ausbildung der Rastnasen kann das Behältnis 34 in die in Fig. 4 dargestellte Stellung gedrückt werden oder aus dieser entfernt werden. Anstelle des Behältnisses 34 kann jedoch auch ein Behältnis 28 bis 32 in die in Fig. 2 am weitesten rechts dargestellte Kammer eingesetzt werden.

An der in den Fig. 1 bis 3 rechten Seite des Halterahmens 26, d.h. am hinteren Ende der Reagenzienkartusche, ist eine Verbindungseinrichtung in Form von zwei flexiblen Rastbügeln 40, 41 angeformt, die eine kraftschlüssige Verbindung zwischen der Reagenzienkartusche 10 und einem Analysengerät herstellt. In Fig. 2 ist eine Montagewand 42 eines Analysengerätes schematisch angedeutet, die entsprechende Öffnungen aufweist, in welche die Rastbügel 40 und 41 einrasten können. Durch die flexible Ausbildung der im wesentlichen U-förmigen Rastbügel und durch die am freien Ende der Rastbügel vorgesehenen Rastnasen läßt sich die Reagenzienkartusche beliebig oft und leicht in die entsprechenden Öffnungen der Montagewand 42 einsetzen und ist dadurch kraftschlüssig mit dem Analysengerät verbunden. Eine unterhalb der Rastbügel vorgesehene Fahne 44, die ebenfalls einstückig angeformt ist, dient zur Aktivierung einer Sensoreinrichtung, beispielsweise einer Lichtschranke, um dem Analysengerät mitzuteilen, daß die Reagenzienkartusche ordnungsgemäß in das Analysengerät eingesetzt ist.

An der in den Fig. 1 bis 3 linken Seite der Reagenzienkartusche, d.h. an deren Vorderseite befindet sich ein Griff 46, der ebenfalls eine einstückig angeformte Schienenführung aufweist, mit der dieser an den Reagenzienbehälter 12 gekoppelt ist. Der Griff ist L-förmig ausgebildet und weist an seinem kürzeren Schenkel eine Fingeröffnung 48 auf, in die mit einem Finger eingegriffen werden kann.

Sofern eine Reagenzienkartusche zusammengestellt wird, bei der beispielsweise nur zwei der Behälter 12 bis 16 vorgesehen sind, kann ein Griff verwendet werden, dessen horizontal verlaufender Schenkel ein eingeformtes Verlängerungsteil aufweist, das der Länge des fehlenden Reagenzienbehälters entspricht. Hierdurch kann die Länge der Reagenzienkartusche konstant gehalten werden.

Wie Fig. 1 zeigt, sind sämtliche Reagenzienbehälter 12 bis 18 an ihren Seiten über etwa die halbe Behälterhöhe derart ausgebildet, daß an der Außenseite der Reagenzienkartusche eine ebene, zusammenhängende Fläche gebildet ist, die sich über die Reagenzienbehälter 12 bis 18 erstreckt. Hierzu sind die Behälter, die im Querschnitt gesehen abgerundete Ecken aufweisen, in ihrem oberen Bereich, d.h. im Bereich der Schienenführungen 22 so ausgebildet, daß sich nach Aneinanderkopplung der Reagenzienbehälter die zusammenhängende Fläche bildet. Auf diese Fläche kann dann ein Etikett 50 glatt aufgeklebt werden, das erforderliche Daten enthält.

Sämtliche Reagenzienbehälter sind an ihrer Oberkante so beschaffen, daß ein Rand mit ausreichender Fläche für das Aufbringen eines flüssigkeitsdichten Verschlusses, z.B. einer Heißsiegelfolie, zur Verfügung steht. Weiterhin ist gewährleistet, daß die Heißsiegelfolie problemlos wieder entfernt werden kann, was dadurch erreicht wird, daß ein Originalitätsverschluß durch eine Klebeverbindung mit der Heißsiegelfolie verbunden wird, die dann beim Entfernen des Originalitätsverschlusses ebenfalls entfernt wird. Hierbei wird der Originalitätsverschluß in einem Arbeitsgang über die gesamte Reagenzienkartusche aufgebracht und überdeckt dabei auch die Rastbügel 40, 41 der Kopplungseinrichtung. Hierdurch ist sichergestellt, daß vor einem Einsatz im Analysengerät der Originalitätsverschluß vom Anwender durch einfaches Abziehen von der Reagenzienkartusche entfernt werden muß.

Aufgrund der obigen Beschreibung sollte klar sein, daß die Erfindung nicht auf die dargestellten Behältergrößen und typen beschränkt ist, die in unterschiedlichster Anzahl in der Reagenzienkartusche Verwendung finden können. Sämtliche Reagenzienbehälter und auch der Griff sind vorzugsweise aus immunologischem inertem Kunststoff, wie beispielsweise Polypropylen, hergestellt. Die Volumina der Gefäße können jedoch je nach Bedarf variieren.

## Patentansprüche

1. Modulare Reagenzienkartusche (10) zur Verwendung in automatischen Analysengeräten, die dadurch gebildet ist, dass mehrere Reagenzienbehälter (12, 14, 16, 18), von denen zumindest einer für die unmittelbare Aufnahme eines Reagenzes ausgebildet ist, mittels einstückig angeformter Kopplungseinrichtungen (22) unmittelbar miteinander verbunden sind, wobei die Kopplungseinrichtungen durch formschlüssige, leicht keilförmig ausgebildete Schienenführungen (22) gebildet sind, die im gekoppelten Zustand selbsttätig verklemmen, wobei die Schienenführungen (22) Anschläge (24) aufweisen, so dass sich ein fluchtendes Ineinandersetzen der Reagenzienbehälter (12, 14, 16, 18) und eine Klemmwirkung bei Erreichen der Anschläge (24) ergibt.

2. Modulare Reagenzienkartusche nach Anspruch 1, wobei zumindest einer der Reagenzienbehälter (18) eine einrastende Verbindungseinrichtung (40, 41) aufweist, um eine kraftschlüssige Verbindung zwischen der Reagenzienkartusche (10) und einem Analysengerät herzustellen.

3. Modulare Reagenzienkartusche nach Anspruch 1 oder 2, wobei einer der Reagenzienbehälter (18) aus einem Halterahmen (26) und einem Behältnis (28, 30, 32, 34) besteht, das ein geringeres Volumen als einer der anderen Reagenzienbehälter (12, 14, 16) besitzt.

4. Modulare Reagenzienkartusche nach Anspruch 3, wobei zumindest ein Behältnis (34) drehbar in dem Halterahmen (26) aufgenommen ist und einen angeformten Zahnkranz (36) aufweist.

5. Modulare Reagenzienkartusche nach Anspruch 4, wobei der Halterahmen (26) teilweise offen ausgebildet ist, derart, dass ein Zugang zu einer Seite oder der Unterseite des Behältnisses (34) ermöglicht ist.

6. Modulare Reagenzienkartusche nach einem der Ansprüche 3, 4 oder 5, wobei das Behältnis (34) in dem Halterahmen (26) durch Rastnasen (37, 39) fixiert ist.

7. Modulare Reagenzienkartusche nach einem der Ansprüche 1 bis 6, wobei diese einen Griff (46) mit einer einstückig angeformten Schienenführung (22) aufweist.

8. Modulare Reagenzienkartusche nach Anspruch 7, wobei der Griff ein Verlängerungsteil aufweist, das der Länge zumindest eines Reagenzienbehälters (12) entspricht.

9. Modulare Reagenzienkartusche nach Anspruch 7 oder 8, wobei der Griff (46) eine Fingeröffnung (48) aufweist.

10. Modulare Reagenzlenkartusche nach einem der Ansprüche 1 bis 9, wobei diese an ihrer Aussenseite eine weitgehend ebene, zusammenhängende Fläche bildet, die sich über die Reagenzienbehälter (12, 14, 16, 18) erstreckt.

## Claims

1. Modular reagent cartridge (10) for use in automatic analysers, which is formed in that a plurality of reagent containers (12, 14, 16, 18), at least one of which is designed for the direct holding of a reagent, are connected directly to one another by means of coupling devices (22) moulded integrally onto them, the coupling devices being formed by interlocking rail guides (22) which are of slightly wedge-shaped design and automatically become wedged together in the coupled state, the rail guides (22) having stops (24), with the result that the reagent containers (12, 14, 16, 18) are placed into one another in an aligned manner and a clamping action is produced when the stops (24) are reached.

2. Modular reagent cartridge according to Claim 1, at least one of the reagent containers (18) having a latching connecting device (40, 41) in order to produce a frictional connection between the reagent cartridge (10) and an analyser.

3. Modular reagent cartridge according to Claim 1 or 2, one of the reagent containers (18) comprising a retaining frame (26) and a receptacle (28, 30, 32, 34) which has a smaller volume than one of the other reagent containers (12, 14, 16).

4. Modular reagent cartridge according to Claim 3, at least one receptacle (34) being held rotatably in the retaining frame (26) and having a toothed ring (36) moulded onto it.

5. Modular reagent cartridge according to Claim 4, the retaining frame (26) being of partially open design in such a manner that access is possible to one side or to the lower side of the receptacle (34).

6. Modular reagent cartridge according to one of Claims 3, 4 or 5, the receptacle (34) being fixed in the retaining frame (26) by means of latching lugs (37, 39).

7. Modular reagent cartridge according to one of Claims 1 to 6, the latter having a handle (46) with a rail guide (22) moulded integrally onto it.

8. Modular reagent cartridge according to Claim 7, the handle having an extension part which corresponds to the length of at least one reagent container (12).

9. Modular reagent cartridge according to Claim 7 or 8, the handle (46) having a finger opening (48).

10. Modular reagent cartridge according to one of Claims 1 to 9, the outer side of the latter forming a largely flat, cohesive surface which extends over the reagent containers (12, 14, 16, 18).

## Revendications

1. Cartouche modulaire à réactifs (10) destinée à être utilisée dans des appareils d'analyse automatiques, formée de plusieurs conteneurs à réactifs (12, 14, 16, 18), parmi lesquels l'un au moins est agencé pour recevoir directement un réactif, sont reliés les uns aux autres de manière directe par des dispositifs de couplage (22) attenants, les dispositifs de couplage étant formés par des glissières avec des formes complémentaires, légèrement cunéiformes, qui, à l'état couplé, se bloquent automatiquement, les glissières (22) comportant des butées (24) telles que l'on obtienne un assemblage aligné des conteneurs à réactifs (12, 14, 16, 18) et un effet de blocage lorsque les butées (24) sont atteintes.

2. Cartouche modulaire à réactifs selon la revendication 1, dans laquelle au moins un des conteneurs à réactifs (18) comporte un dispositif de liaison (40, 41) à encliquetage, aux fins de réaliser une liaison par adhérence entre la cartouche à réactifs (10) et l'appareil d'analyse.

3. Cartouche modulaire à réactifs selon la revendication 1 ou 2, dans laquelle l'un des conteneurs à réactifs (18) est formé d'un cadre-support (26) et d'un récipient (28, 30, 32, 34), qui présente un volume plus faible que l'un des autres conteneurs à réactifs (12, 14, 16).

4. Cartouche modulaire à réactifs selon la revendication 3, dans laquelle au moins un récipient (34) est monté avec possibilité de rotation dans le cadre-support (26) et présente une couronne dentée (36) attenante.

5. Cartouche modulaire à réactifs selon la revendication 4, dans laquelle le cadre-support (26) est partiellement ouvert, de manière à permettre un accès à un côté ou à la face inférieure du récipient (34).

6. Cartouche modulaire à réactifs selon une des revendications 3, 4 ou 5, dans laquelle le récipient (34) est fixé dans le cadre-support (26) par des ergots d'encliquetage (37, 39).

7. Cartouche modulaire à réactifs selon une des revendications 1 à 6, dans laquelle la cartouche comporte une poignée (46) avec une glissière (22) monobloc.

8. Cartouche modulaire à réactifs selon la revendication 7, dans laquelle la poignée comporte une partie formant prolongement qui correspond à longueur d'au moins un conteneur à réactif (12).

9. Cartouche modulaire à réactifs selon la revendication 7 ou 8, dans laquelle la poignée (46) comporte une ouverture (48) pour un doigt.

10. Cartouche modulaire à réactifs selon une des revendications 1 à 9, comportant sur sa face extérieure, une surface continue, essentiellement plane, qui s'étend au-dessus des conteneurs à réactifs (12, 14, 16, 18).
